# EUROPEAN PATENT APPLICATION

(11) **EP 3 770 532 A1**
(43) Date of publication of application: **27.01.2021**
(21) Application number: 20186602.7
(22) Date of filing: 17.07.2020
(51) Int. Cl.: F25B 13/00, F25B 27/02, F25B 31/00, B60H 1/00

(54) **AIR-CONDITIONING APPARATUS**

(30) Priority: 25.07.2019 JP 2019136929
(71) Applicant: Panasonic Intellectual Property Management Co., Ltd., Osaka-shi, Osaka 540-6207 (JP)
(72) Inventor: MASUDA, Tetsuya, Osaka, 540-6207 (JP); IITAKA, Seishi, Osaka, 540-6207 (JP); MATSUI, Masaru, Osaka, 540-6207 (JP); KONDO, Akihiro, Osaka, 540-6207 (JP)
(74) Representative: Eisenführ Speiser

(57) **Abstract**

In an air-conditioning apparatus in which a compressor driven by a gas engine, and a compressor driven by an electric motor are connected in parallel, a highly efficient heating operation is enabled even in a time of a low outside air temperature. A first bypass pipe (115) connecting a low pressure gas pipe (111) upstream of an accumulator (112), and a refrigerant liquid pipe (110) is provided, and in the first bypass pipe (115), a first exhaust heat recovery decompression device (116) and a fist exhaust heat recovery heat exchanger (117) are provided in order from the refrigerant liquid pipe (110), a second bypass pipe (118) connecting a second compressor suction pipe (114) of the second compressor (102) and the refrigerant liquid pipe (110) is provided, and in the second bypass pipe (118), a second exhaust heat recovery decompression device (119) and a second exhaust heat recovery heat exchanger (120) are provided in order from the refrigerant liquid pipe (110).

## Description

### BACKGROUND OF THE INVENTION

### Field of the Invention

The present invention relates to an air-conditioning apparatus loaded with a compressor that drives by a gas engine.

### Description of the Related Art

There is proposed an air-conditioning apparatus loaded with a plurality of compressors having different capacities in an outdoor unit, and including a plurality of kinds of driving means provided correspondingly to the respective compressors, and control means causing the plurality of compressors to drive individually or drive in combination, in response to the magnitude of a required load (see Japanese Patent Laid-Open No. 2003-56944, for example).

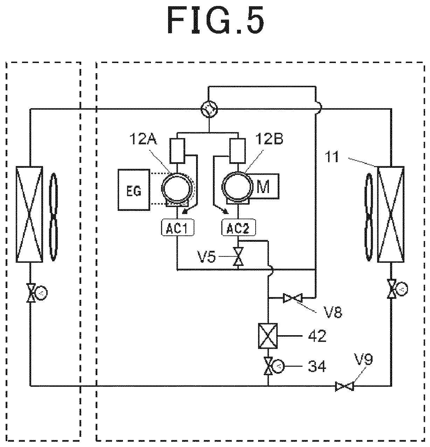

FIG. 5 is an apparatus configuration diagram of Japanese Patent Laid-Open No. 2003-56944, where a compressor 12A and a compressor 12B are connected in parallel in a refrigeration cycle. The apparatus described in Japanese Patent Laid-Open No. 2003-56944 drives the compressor 12A having a large capacity by a gas engine EG, and drives the compressor 12B having a small capacity by an electric motor M.

When the load required of the compressor is small, the compressor 12B having a small capacity is driven by the electric motor M, whereas when the required load is medium, the compressor 12A having a large capacity is driven by the gas engine EG, and when the required load is large, the two large and small compressors are driven simultaneously by the respective kinds of drive means.

In the air-conditioning apparatus that drives one compressor by one gas engine, the engine is selected and adjusted so as to be able to perform an highly efficient operation in response to a medium load that is frequently required, and therefore when a small load is required and a large load is required, the engine has to be operated after the engine speed is removed from the rotational speed range where a highly efficient operation can be performed.

In the art disclosed in Japanese Patent Laid-Open No. 2003-56944, in the case of the load required at the time of a heating operation being a medium/high load, a refrigerant having absorbed heat from outside air in an outdoor heat exchanger 11 is sucked by the compressor 12A driven by the gas engine EG via an accumulator AC1, and a medium-temperature medium-pressure refrigerant having absorbed heat from exhaust heat of the gas engine in an exhaust heat recovery heat exchanger 42 is sucked by the electric-motor driving compressor 12B via an accumulator AC2.

In this configuration, an even more highly efficient operation is enabled by utilizing the exhaust heat of the internal combustion engine that is adopted as the drive means for the compressor with the large capacity, in heating the refrigerant that is sucked by the compressor with the small capacity.

In the art disclosed in the same Japanese Patent Laid-Open No. 2003-56944, in the case of the outside temperature being low in the heating operation, only the compressor 12A is driven by the gas engine EG irrespective of the magnitude of the load, on-off valves V5 and V9 are closed, an on-off valve V8 is opened, and a liquid refrigerant with medium temperature and medium pressure is changed to a liquid refrigerant with low temperature and low pressure by an expansion valve 34, and is heated by gas engine exhaust heat by the exhaust heat recovery heat exchanger 42 to be gas refrigerant with low temperature and low pressure, which is then sucked by the compressor 12A via the accumulator AC1. In this configuration, even in the situation where the outside air temperature is low and the operation is likely to shift to defrost (defrosting) operation frequently, it is possible to heat the refrigerant by using the exhaust heat recovery heat exchanger 42 without using the outdoor heat exchanger 11, so that stable air-conditioning operation becomes possible without temporary interruption of operation due to defrost operation.

### SUMMARY OF THE INVENTION

In the above described conventional air-conditioning apparatus, in the case of the load required in the heating operation time being a medium/high load, the compressor driven by the gas engine sucks the refrigerant having absorbed heat from outside air in the outdoor heat exchanger, and the compressor driven by the electric motor sucks the refrigerant having absorbed heat from the exhaust heat of the gas engine in the exhaust heat recovery heat exchanger. Therefore, the above described conventional air-conditioning apparatus has a problem in that when the required load is high in the heating operation, and the compressor driven by the gas engine and the compressor driven by the electric motor are used in combination, exhaust heat of the gas engine cannot be used as the absorption heat source of the refrigerant sucked by the compressor driven by the gas engine.

Since the compressor driven by the gas engine has a larger capacity than the compressor driven by the electric motor, and the gas engine exhaust heat has a higher temperature than the temperature of the outside air, so that it cannot be said that highly efficient heating operation is possible as the entire apparatus, in the above described conventional air-conditioning apparatus that cannot use the exhaust heat of the gas engine as the absorption heat source of the refrigerant sucked by the compressor with a large capacity that drives by the gas engine.

Further, when the outside air temperature is low, the above described conventional air-conditioning apparatus drives only the compressor driven by the gas engine irrespective of the magnitude of the load, and does not drive the compressor driven by the electric motor. The two compressors are not used in combination, and therefore, for example, when the outside air temperature is low in the heating operation, and the required load is high, the refrigerant circulation amount reduces as compared with the case where the two compressors are used in combination. Specifically, the above described conventional air-conditioning apparatus also has the problem of causing reduction in heating capacity at the times of heating, low outside temperatures and high load.

The present invention is to solve the above described conventional problems, and has an object to provide an air-conditioning apparatus that can use exhaust heat of a gas engine as an absorption heat source of refrigerants sucked by both a compressor driven by the gas engine, and a compressor driven by an electric motor, in other words, that enables heating operation with high capacity and high efficiency, even when a load is high in a heating operation, and the compressor driven by the gas engine and the compressor driven by the electric motor are used in combination.

In order to solve the above described conventional problems, an air-conditioning apparatus of the present invention is configured by a first compressor with a gas engine as a driving source and a second compressor with an electric motor as a driving source being connected in parallel, wherein a first bypass pipe connecting a low pressure gas pipe upstream of an accumulator and a refrigerant liquid pipe is provided, in the first bypass pipe, a first exhaust heat recovery decompression device and a fist exhaust heat recovery heat exchanger are provided in order from the refrigerant liquid pipe, a second bypass pipe connecting a suction pipe of the second compressor and the refrigerant liquid pipe is provided, in the second bypass pipe, a second exhaust heat recovery decompression device and a second exhaust heat recovery heat exchanger are provided in order from the refrigerant liquid pipe, an oil separator is provided downstream of a junction portion of discharge pipes of the first compressor and the second compressor, an oil return pipe is provided at a bottom portion of the oil separator, and the oil return pipe is connected to a first oil return pipe connected to the low pressure gas pipe downstream of the accumulator via a first oil return adjustment valve, and a second oil return pipe connected to the second bypass pipe downstream of the second exhaust heat recovery heat exchanger via a second oil return adjustment valve.

Thereby, in the heating operation time, the first compressor with the gas engine as the driving source and the second compressor with the electric motor as the driving source are driven together, the first compressor sucks the gas refrigerant evaporated in the first exhaust heat recovery heat exchanger, or in both of the first exhaust heat recovery heat exchanger and the outdoor heat exchanger, and the second compressor sucks the gas refrigerant evaporated in the second exhaust heat recovery heat exchanger. Specifically, the refrigerant evaporating in the first exhaust heat recovery heat exchanger, or in both of the first exhaust heat recovery heat exchanger and the outdoor heat exchanger, and the refrigerant evaporating in the second exhaust heat recovery heat exchanger are sucked by the separate compressors without joining each other.

The air-conditioning apparatus of the present invention can use exhaust heat of the gas engine as the absorption heat source of the refrigerants sucked by both the compressor driven by the gas engine and the compressor driven by the electric motor when the required load is large in the heating operation, and the compressor driven by the gas engine and the compressor driven by the electric motor are used in combination.

Specifically, the air-conditioning apparatus that enables heating operation with high capacity and high efficiency even when the load is high in the heating operation can be provided.

### BRIEF DESCRIPTION OF THE DRAWINGS

FIG. 1 is a refrigeration cycle diagram illustrating a configuration of an embodiment of the present invention;
FIG. 2 is a cooling water circuit diagram illustrating the configuration of the embodiment of the present invention;
FIG. 3 is a graph illustrating an optimal operation ratio according to a magnitude of a load, of a gas-engine driving compressor and an electric-motor driving compressor of an air-conditioning apparatus in the embodiment of the present invention;
FIG. 4 is a Mollier diagram showing refrigeration cycle operating points in embodiment 1 of the present invention; and
FIG. 5 is a refrigeration cycle diagram illustrating a conventional air-conditioning apparatus in Japanese Patent Laid-Open No. 2003-56944.

### DETAILED DESCRIPTION OF THE PREFERRED EMBODIMENT

A first invention is configured by a first compressor with a gas engine as a driving source and a second compressor with an electric motor as a driving source being connected in parallel, wherein a first bypass pipe connecting a low pressure gas pipe upstream of an accumulator, and a refrigerant liquid pipe is provided, in the first bypass pipe, a first exhaust heat recovery decompression device and a fist exhaust heat recovery heat exchanger are provided in order from the refrigerant liquid pipe, a second bypass pipe connecting a suction pipe of the second compressor and the refrigerant liquid pipe is provided, in the second bypass pipe, a second exhaust heat recovery decompression device and a second exhaust heat recovery heat exchanger are provided in order from the refrigerant liquid pipe, an oil separator is provided downstream of a junction portion of discharge pipes of the first compressor and the second compressor, an oil return pipe is provided at a bottom portion of the oil separator, and the oil return pipe is connected to a first oil return pipe connected to a low pressure gas pipe downstream of the accumulator via a first oil return adjustment valve, and a second oil return pipe connected to the second bypass pipe downstream of the second exhaust heat recovery heat exchanger via a second oil return adjustment valve.

According to the above, in the heating operation time, the first compressor with the gas engine as the driving source and the second compressor with the electric motor as the driving source are driven together, the first compressor sucks the gas refrigerant evaporated in the first exhaust heat recovery heat exchanger, or in both of the first exhaust heat recovery heat exchanger and the outdoor heat exchanger, and the second compressor sucks the gas refrigerant evaporated in the second exhaust heat recovery heat exchanger. Accordingly, the refrigerant evaporating in the first exhaust heat recovery heat exchanger, or in both of the first exhaust heat recovery heat exchanger and the outdoor heat exchanger, and the refrigerant evaporating in the second exhaust heat recovery heat exchanger are sucked by the separate compressors without joining each other.

Specifically, exhaust heat of the gas engine can be used as the absorption heat source of the refrigerant sucked by both the compressor driven by the gas engine and the compressor driven by the electric motor when the required load is large in the heating operation, and the compressor driven by the gas engine and the compressor driven by the electric motor are used in combination.

A second invention is the air-conditioning apparatus of the first invention, wherein a capacity of the first compressor is larger than a capacity of the second compressor, the air-conditioning apparatus including a cooling water circuit cooling the gas engine, wherein in the cooling water circuit, the first exhaust heat recovery heat exchanger and the second exhaust heat recovery heat exchanger are connected in series to a flow of cooling water, and the second exhaust heat recovery heat exchanger is provided at an upstream side of the first exhaust heat recovery heat exchanger.

According to the above, the cooling water that receives thermal energy from the gas engine and has a high temperature flows into the second exhaust heat recovery heat exchanger first, and exchanges heat with the refrigerant to be sucked by the second compressor. Thereafter, the cooling water flows into the first exhaust heat recovery heat exchanger, and exchanges heat with the refrigerant to be sucked by the first compressor. The temperature of the cooling water decreases by exchanging heat with the refrigerant, and therefore the temperature of the cooling water becomes lower when the cooling water flows into the first exhaust heat recovery heat exchanger than when the cooling water flows into the second exhaust heat recovery heat exchanger.

Since the capacity of the first compressor is larger than the capacity of the second compressor, and therefore the pressure of the refrigerant sucked by the first compressor is lower than the pressure of the refrigerant sucked by the second compressor. Specifically, the temperature of the refrigerant evaporating in the first exhaust heat recovery heat exchanger is lower as compared with the temperature of the refrigerant evaporating in the second exhaust heat recovery heat exchanger.

When it becomes difficult for the refrigerant to absorb heat from the outside air in the outdoor heat exchanger because the outside air temperature is particularly low, and the heat absorption amount of the refrigerant in the first exhaust heat recovery heat exchanger increases, reduction in temperature of the cooling water in the first exhaust heat recovery heat exchanger increases, but since the second exhaust heat recovery heat exchanger is provided at the upstream side of the first exhaust heat recovery heat exchanger to the flow of the cooling water, the temperature of the cooling water flowing into the second exhaust heat recovery heat exchanger becomes a high temperature, and is not influenced by the absorption heat amount of the refrigerant in the first exhaust heat recovery heat exchanger.

Accordingly, even when it becomes difficult for the refrigerant to absorb heat from the outside air in the outdoor heat exchanger because the outside air temperature is particularly low, exhaust heat of the gas engine can be effectively used according to the capacities of the first compressor and the second compressor, as the heat absorption source of the refrigerants to be sucked by both the compressor driven by the gas engine and the compressor driven by the electric motor.

Further, since the temperature of the cooling water flowing into the second exhaust heat recovery heat exchanger is a high temperature, it also becomes possible to reduce power that is necessary for the second compressor to compress the refrigerant if the pressure of the refrigerant sucked by the second compressor is set to be high.

Specifically, even when the outside air temperature is particularly low in the heating operation, and the air-conditioning load of heating is high, the air-conditioning apparatus with high capacity and high efficiency can be provided.

Hereinafter, an embodiment of the present invention will be described with reference to the drawings. Note that the present invention is not limited by the embodiment.

### (Embodiment 1)

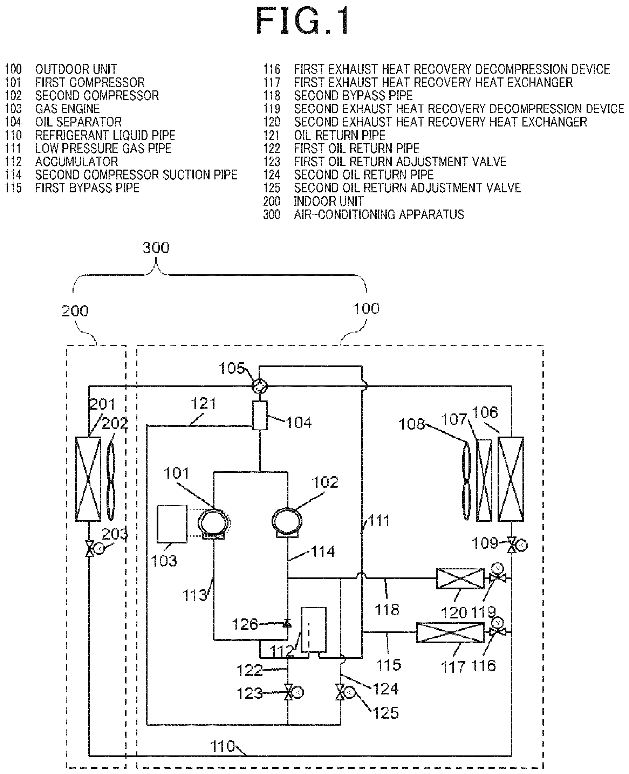

FIG. 1 illustrates a configuration of an air-conditioning apparatus 300 in the embodiment of the present invention.

The air-conditioning apparatus 300 according to the present embodiment includes an outdoor unit 100 and an indoor unit 200. Although only one indoor unit 200 is installed in FIG. 1, a plurality of indoor 200 units may be installed in parallel, with respect to the outdoor unit 100.

The outdoor unit 100 includes a gas engine 103 with gas as a driving source, a first compressor 101 that obtains a driving force from the gas engine 103 to compress a refrigerant, and a second compressor 102 with an electric motor (not illustrated) as a driving source. In the present embodiment, the first compressor 101 having a higher capability than the second compressor 102 is used.

Refrigerant discharge sides of the first compressor 101 and the second compressor 102 join each other and are provided with an oil separator 104. The oil separator 104 separates oil contained in discharged refrigerant gas of the first compressor 101 and the second compressor 102.

An outdoor heat exchanger 106 is connected to downstream of the oil separator 104 via a four-way valve 105. The four-way valve 105 is to switch a refrigeration cycle between cooling and heating. Note that in FIG. 1, at a heating operation time, the refrigerant flows as shown by solid lines in the drawing, and at a cooling operation time, the refrigerant flows as shown by broken lines in the drawing.

A radiator 107 for performing cooling of cooling water of the gas engine 103 is disposed at a leeward side of the outdoor heat exchanger 106. Further, in a vicinity of the radiator 107, an outdoor blower fan 108 for passing outside air through the outdoor heat exchanger 106 and the radiator 107 is disposed.

An outdoor decompression device 109 is provided at one side of the outdoor heat exchanger 106, and the outdoor decompression device 109 is connected to the indoor unit 200 via a refrigerant liquid pipe 110.

The indoor unit 200 includes an indoor heat exchanger 201, an indoor blower fan 202, and an indoor decompression device 203. The refrigerant liquid pipe 110 is connected to one end of the indoor heat exchanger 201 via the indoor decompression device 203.

The other end of the indoor heat exchanger 201 is connected to a low pressure gas pipe 111 via the four-way valve 105, and the low pressure gas pipe 111 is connected to a first suction pipe 113 of the first compressor 101 and a second compressor suction pipe 114 of the second compressor 102 via an accumulator 112.

A first bypass pipe 115 that is connected to the low pressure gas pipe 111 is connected to a middle of the refrigerant liquid pipe 110 that connects the outdoor heat exchanger 106 and the indoor heat exchanger 201. In the first bypass pipe 115, a first exhaust heat recovery decompression device (decompressing means) 116 and a first exhaust heat recovery heat exchanger 117 are provided in order from the refrigerant liquid pipe 110. Similarly, a second bypass pipe 118 that is connected to the second compressor suction pipe 114 is connected to a middle of the refrigerant liquid pipe 110 that connects the outdoor heat exchanger 106 and the indoor heat exchanger 201. In the second bypass pipe 118, a second exhaust heat recovery decompression device (decompressing means) 119 and a second exhaust heat recovery heat exchanger 120 are provided in order from the refrigerant liquid pipe 110. The refrigerant flowing in the first exhaust heat recovery heat exchanger 117 and the second exhaust heat recovery heat exchanger 120 is able to absorb heat from engine cooling water in a heating time.

Further, one end of an oil return pipe 121 is connected to a lower part of the oil separator 104, and the other end of the oil return pipe 121 is branched.

A first oil return pipe 122 at one side that is branched from the oil return pipe 121 is connected to the low pressure gas pipe 111 downstream of the accumulator 112 via a first oil return adjustment valve 123.

Further, a second oil return pipe 124 at the other side that is branched from the oil return pipe 121 is connected to the second bypass pipe 118 downstream of the second exhaust heat recovery heat exchanger 120 via a second oil return adjustment valve 125.

Further, in the second compressor suction pipe 114, a check valve 126 is provided at an upstream side from a connection portion of the second bypass pipe 118 with the second compressor suction pipe 114.

Note that the check valve 126 is not necessarily limited to a check valve. For example, the check valve 126 can be any valve that can prevent a medium pressure refrigerant that flows into the second compressor suction pipe 114 via the second bypass pipe 118 from flowing into the first suction pipe 113 where a low pressure refrigerant flows, such as an on-off valve, for example.

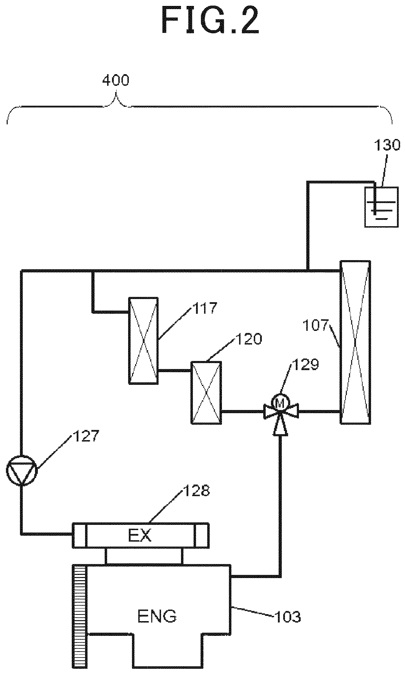

Next, a configuration of a cooling water circuit 400 included in the air-conditioning apparatus 300 in the embodiment of the present invention will be described with reference to FIG. 2.

The cooling water circuit 400 is a flow path that includes a cooling water pump 127, an exhaust gas heat exchanger 128, the gas engine 103, a three-way valve 129, the first exhaust heat recovery heat exchanger 117, the second exhaust heat recovery heat exchanger 120, the radiator 107 and a reservoir tank 130, and is to cool the gas engine 103 by cooling water circulating in the circuit configured by these components. Note that in the cooling water circuit 400 included in the air-conditioning apparatus 300 of the present invention, the first exhaust heat recovery heat exchanger 117 and the second exhaust heat recovery heat exchanger 120 are connected in series, and the second exhaust heat recovery heat exchanger 120 is disposed at an upstream side of the first exhaust heat recovery heat exchanger 117. The cooling water pump 127 is provided to circulate the cooling water of the gas engine 103 in the circuit. The reservoir tank 130 is used to temporarily store surplus of cooling water and to replenish cooling water when the cooling water becomes insufficient. The radiator 107 is disposed at the leeward side of the outdoor heat exchanger 106, and radiates heat of the cooling water by the outdoor blower fan 108. The three-way valve 129 is configured to allow the cooling water to flow toward a radiator 107, flow toward the first exhaust heat recovery heat exchanger 117 and the second exhaust heat recovery heat exchanger 120 that are connected in series, or flow toward both the radiator 107 and the first exhaust heat recovery heat exchanger 117 and the second exhaust heat recovery heat exchanger 120 that are connected in series.

Next, an operation of the air-conditioning apparatus 300 of the present embodiment will be described.

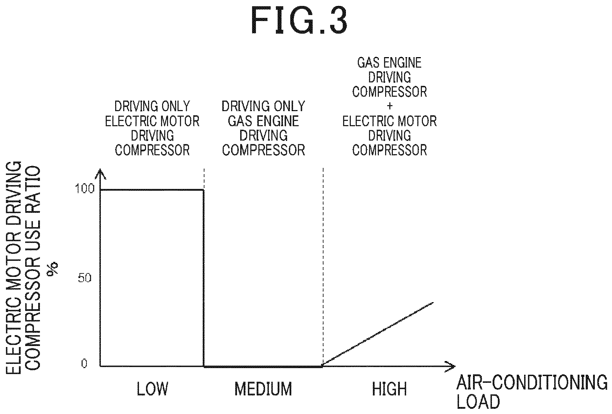

FIG. 3 is a diagram illustrating a relationship of a use ratio of the first compressor 101 and the second compressor 102 to an air-conditioning load.

As illustrated in FIG. 3, the trial calculation result and the actual machine evaluation result of the inventors reveal that in the air-conditioning apparatus 300 of the present embodiment, a highest energy efficiency is obtained by driving only the second compressor 102 driven by the electric motor when the air-conditioning load is small, driving only the first compressor 101 driven by the gas engine 103 when the air-conditioning load is medium, and by driving the first compressor 101 driven by the gas engine 103 with maximum output and making up for insufficiency with the second compressor 102 driven by the electric motor when the air-conditioning load is high.

In the air-conditioning apparatus 300 of the present embodiment, in a case of the air-conditioning load being high in the heating operation, a gas refrigerant with low temperature and low pressure that has absorbed heat from air (outside air) is compressed to a high temperature and high pressure by the first compressor 101 driven by the gas engine 103, and a gas refrigerant with medium temperature and medium pressure that has absorbed heat from the exhaust heat of the gas engine 103 is compressed to the high temperature and high pressure by the second compressor 102 driven by the electric motor.

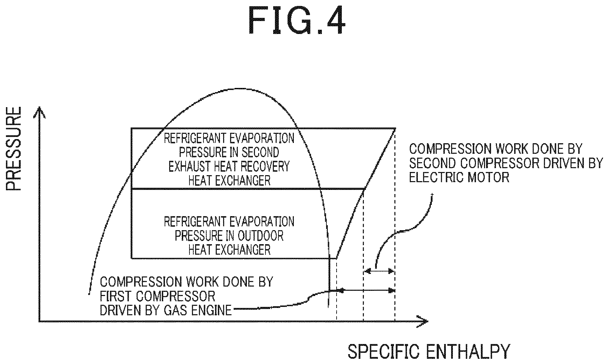

FIG. 4 is a Mollier diagram illustrating refrigeration cycle operating points of the present embodiment.

As illustrated in FIG. 4, it is found that in the present embodiment, suction pressure of the second compressor 102 driven by the electric motor is higher than suction pressure of the first compressor 101 driven by the gas engine 103, and a compression ratio (high pressure/low pressure) of the second compressor 102 driven by the electric motor is low, so that energy consumed by the second compressor 102 driven by the electric motor can be decreased.

Next, operations of the air-conditioning apparatus 300 and the cooling water circuit 400 of the present embodiment will be described by being divided into magnitudes of required loads in the cooling operation, heating operation and respective operation states, with reference to FIG. 1 and FIG. 2.

### (Cooling operation low load time)

In a low load time of the cooling operation, only the second compressor 102 with the electric motor as the driving source is driven. The first exhaust heat recovery decompression device 116 and the second exhaust heat recovery decompression device 119 are closed. The four-way valve 105 is set to flow the refrigerant as shown by the broken lines.

The refrigerant with high temperature and high pressure compressed by the second compressor 102 flows into the oil separator 104. The gas refrigerant with high purity from which oil is separated in the oil separator 104 passes through the four-way valve 105 and enters the outdoor heat exchanger 106. The gas refrigerant condenses after exchanging heat with outside air and radiating heat in the outdoor heat exchanger 106, becomes a liquid refrigerant with high pressure, passes through the outdoor decompression device 109, and is supplied to the indoor unit 200.

The high-pressure liquid refrigerant entering the indoor unit 200 is decompressed in the indoor decompression device 203 to be in a gas-liquid two-phase state, and flows into the indoor heat exchanger 201. The refrigerant in the gas-liquid two-phase state evaporates after exchanging heat with air in a space to be air-conditioned and absorbing heat in the indoor heat exchanger 201, becomes a gas refrigerant, and flows out from the indoor unit 200.

The gas refrigerant flowing out from the indoor unit 200 returns to the outdoor unit 100 again. The gas refrigerant flowing into the outdoor unit 100 passes through the four-way valve 105, and the accumulator 112, returns to the second compressor 102, and repeats the aforementioned process.

Further, in the oil return pipe 121, the first oil return adjustment valve 123 is opened, and the second oil return adjustment valve 125 is closed. Lubricating oil separated in the oil separator 104 is returned to the low pressure gas pipe 111 through the oil return pipe 121 and the first oil return pipe 122, passes through the second compressor suction pipe 114, returns to the second compressor 102, and repeats the aforementioned process.

In the low load time of the cooling operation, the first compressor 101 with the gas engine 103 as the driving source is not driven, so that the cooling water pump 127 stops, and the cooling water circuit 400 does not operate.

### (Cooling operation medium load time)

In a medium load time of the cooling operation, the first compressor 101 with the gas engine 103 as the driving source is driven. The first exhaust heat recovery decompression device 116 and the second exhaust heat recovery decompression device 119 are closed. The four-way valve 105 is set to flow the refrigerant as shown by the broken lines.

The refrigerant with high temperature and high pressure that is compressed by the first compressor 101 flows into the oil separator 104. The gas refrigerant with high purity from which oil is separated in the oil separator 104 passes through the four-way valve 105, and enters the outdoor heat exchanger 106. The gas refrigerant condenses after exchanging heat with outside air and radiating heat in the outdoor heat exchanger 106, becomes the liquid refrigerant with high pressure to pass through the outdoor decompression device 109, and is supplied to the indoor unit 200.

The liquid refrigerant with high pressure entering the indoor unit 200 is decompressed in the indoor decompression device 203 to be in a gas-liquid two-phase state, and flows into the indoor heat exchanger 201. The refrigerant in the gas-liquid two-phase state evaporates after exchanging heat with air in a space to be air-conditioned and absorbing heat in the indoor heat exchanger 201, becomes the gas refrigerant, and flows out from the indoor unit 200.

The gas refrigerant flowing out from the indoor unit 200 returns to the outdoor unit 100 again. The gas refrigerant flowing into the outdoor unit 100 passes through the four-way valve 105 and the accumulator 112, returns to the first compressor 101, and repeats the aforementioned process.

Further, in the oil return pipe 121, the first oil return adjustment valve 123 is opened, and the second oil return adjustment valve 125 is closed. Lubricating oil separated in the oil separator 104 is returned to the low pressure gas pipe 111 through the oil return pipe 121 and the first oil return pipe 122, passes through the first compressor suction pipe 113, returns to the first compressor 101, and repeats the aforementioned process.

The exhaust heat generated in the gas engine 103 is carried to the radiator 107 by the engine cooling water described later and the pump, exchanges heat with outside air to radiate heat, and returns to the gas engine 103 again.

### (Cooling high load time)

In a high load time of the cooling operation, both the first compressor 101 with the gas engine 103 as the driving source and the second compressor 102 with the electric motor as the driving source are driven. The first exhaust heat recovery decompression device 116 and the second exhaust heat recovery decompression device 119 are closed. The four-way valve 105 is set to flow the refrigerant as shown by the broken lines.

The refrigerant with high temperature and high pressure that is compressed by the first compressor 101 and the second compressor 102 flows into the oil separator 104. The refrigerant flowing into the oil separator 104 becomes a gas refrigerant with high purity from which oil is separated, passes through the four-way valve 105, and enters the outdoor heat exchanger 106. The gas refrigerant condenses after exchanging heat with outside air and radiates heat in the outdoor heat exchanger 106, becomes a liquid refrigerant with high pressure to pass through the outdoor decompression device 109, and is supplied to the indoor unit 200.

The liquid refrigerant with high pressure entering the indoor unit 200 is decompressed in the indoor decompression device 203 to be in a gas-liquid two-phase state, and flows into the indoor heat exchanger 201. The refrigerant in the gas-liquid two-phase state evaporates after exchanging heat with air in a space to be air-conditioned and absorbing heat, becomes a gas refrigerant, and flows out from the indoor unit 200.

The gas refrigerant flowing out from the indoor unit 200 returns to the outdoor unit 100 again. The gas refrigerant flowing into the outdoor unit 100 is branched after passing through the four-way valve 105 and the accumulator 112, returns to the first compressor 101 through the first compressor suction pipe 113, returns to the second compressor 102 through the second compressor suction pipe 114, and repeats the aforementioned process.

Further, in the oil return pipe 121, the first oil return adjustment valve 123 is opened, and the second oil return adjustment valve 125 is closed. Lubricating oil separated in the oil separator 104 is returned to the low pressure gas pipe 111 through the oil return pipe 121 and the first oil return pipe 122, returns to the first compressor 101 through the first compressor suction pipe 113, returns to the second compressor 102 through the second compressor suction pipe 114, and repeats the aforementioned process.

In the cooling high load time, the exhaust heat generated in the gas engine 103 is also carried to the radiator 107 by the engine cooling water described later and the pump, exchanges heat with outside air to radiate heat, and returns to the gas engine 103 again.

In the medium load time and the high load time in which the first compressor 101 with the gas engine 103 as the driving source is driven in the cooling operation, the cooling water pump 127 for circulating the cooling water drives to cool the gas engine 103. The cooling water that is pumped out by the cooling water pump 127 first flows into the exhaust gas heat exchanger 128, and cools the exhaust gas of the gas engine 103. The exhaust gas cooled in the exhaust gas heat exchanger 128 is released to outside air from an exhaust gas muffler not illustrated. The cooling water passing through the exhaust gas heat exchanger 128 subsequently flows into the gas engine 103, and cools the gas engine 103. Thereafter, the cooling water that cools the gas engine 103 flows into the three-way valve 129. The three-way valve 129 is controlled so as to allow all the cooling water from the gas engine 103 to flow toward the radiator 107 at the time of cooling. The cooling water flowing into the radiator 107 is cooled by introduced outside air in the outdoor unit 100, returns to the cooling water pump 127 again, and repeats the aforementioned process. Note that an outdoor unit control section not illustrated monitors a cooling water outlet temperature of the gas engine 103, and controls a rotational speed of the cooling water pump 127 so that the cooling water outlet temperature is substantially constant.

### (Heating low load time)

In a low load time of the heating operation, only the second compressor 102 with the electric motor as the driving source is driven. The first exhaust heat recovery decompression device 116 and the second exhaust heat recovery decompression device 119 are closed. The four-way valve 105 is set to flow the refrigerant as shown by the solid lines.

The refrigerant with high temperature and high pressure compressed in the second compressor 102 flows into the oil separator 104. The gas refrigerant with high purity from which oil is separated in the oil separator 104 is supplied to the indoor unit 200 through the four-way valve 105.

The gas refrigerant with high temperature and high pressure entering the indoor unit 200 flows into the indoor heat exchanger 201, condenses after exchanging heat with air in the space to be air-conditioned and radiating heat, becomes a liquid refrigerant, and flows out from the indoor unit 200 through the indoor decompression device 203.

The liquid refrigerant flowing out from the indoor unit 200 returns to the outdoor unit 100 again. The liquid refrigerant flowing into the outdoor unit 100 is decompressed in the outdoor decompression device 109 to be in a gas-liquid two-phase state, and flows into the outdoor heat exchanger 106. The refrigerant in the gas-liquid two-phase state evaporates after exchanging heat with outside air and absorbing heat in the outdoor heat exchanger 106, becomes a gas refrigerant, passes through the four-way valve 105 and the accumulator 112, returns to the second compressor 102, and repeats the aforementioned process.

Further, in the oil return pipe 121, the first oil return adjustment valve 123 is opened, and the second oil return adjustment valve 125 is closed. The lubricating oil separated in the oil separator 104 is returned to the low pressure gas pipe 111 through the oil return pipe 121 and the first oil return pipe 122, passes through the second compressor suction pipe 114, returns to the second compressor 102, and repeats the aforementioned process.

In the heating operation low load time, the first compressor 101 with the gas engine 103 as the driving source does not drive, so that the cooling water pump 127 stops, and the cooling water circuit 400 does not operate.

### (Heating medium load time)

In a medium load time of the heating operation, the first compressor 101 with the gas engine 103 as the driving source is driven. The first exhaust heat recovery decompression device 116 and the second exhaust heat recovery decompression device 119 are closed. The four-way valve 105 is set to flow the refrigerant as shown by the solid lines.

The refrigerant with high temperature and high pressure compressed by the first compressor 101 flows into the oil separator 104. The gas refrigerant with high purity from which oil is separated in the oil separator 104 passes through the four-way valve 105 and is supplied to the indoor unit 200.

The gas refrigerant with high temperature and high pressure entering the indoor unit 200 flows into the indoor heat exchanger 201, condenses after exchanging heat with air in the space to be air-conditioned and radiating the heat, becomes a liquid refrigerant, and flows out from the indoor unit 200 through the indoor decompression device 203.

The liquid refrigerant flowing out from the indoor unit 200 returns to the outdoor unit 100 again. The liquid refrigerant flowing into the outdoor unit 100 is decompressed in the outdoor decompression device 109 to be in a gas-liquid two-phase state and flows into the outdoor heat exchanger 106. The refrigerant in the gas-liquid two-phase state evaporates after exchanging heat with outside air and absorbing heat, and becomes a gas refrigerant. Thereafter, the gas refrigerant passes through the four-way valve 105 and the accumulator 112, returns to the first compressor 101, and repeats the aforementioned process.

Further, in the oil return pipe 121, the first oil return adjustment valve 123 is opened, and the second oil return adjustment valve 125 is closed. Lubricating oil separated in the oil separator 104 is returned to the low pressure gas pipe 111 through the oil return pipe 121 and the first oil return pipe 122, passes through the first compressor suction pipe 113, returns to the first compressor 101, and repeats the aforementioned process.

The exhaust heat generated in the gas engine 103 is carried to the radiator 107 by the engine cooling water described later and the pump, exchanges heat with outside air and radiates heat, and returns to the gas engine 103 again.

In the medium load time in which the gas engine 103 drives in the heating operation, the cooling water pump 127 for cooling the gas engine 103 drives. The cooling water that is pumped out by the cooling water pump 127 first flows into the exhaust gas heat exchanger 128, and cools the exhaust gas of the gas engine 103. The exhaust gas cooled by the exhaust gas heat exchanger 128 is released to outside air from the exhaust gas muffler not illustrated. Next, the cooling water passing through the exhaust gas heat exchanger 128 flows into the gas engine 103, and cools the gas engine 103. Thereafter, the cooling water that cools the gas engine 103 flows into the three-way valve 129. The three-way valve 129 is controlled so as to allow all the cooling water flowing out from the gas engine 103 to flow toward the radiator 107. The cooling water flowing into the radiator 107 is cooled by the introduced outside air in the outdoor unit 100, returns to the cooling water pump 127 again, and repeats the aforementioned process. Note that the outdoor unit control section not illustrated monitors the cooling water outlet temperature of the gas engine 103, and controls the rotational speed of the cooling water pump 127 so that the cooling water outlet temperature is substantially constant.

### (Heating high load and low outside air temperature time)

In the high load and low outside air temperature time of the heating operation, the first compressor 101 with the gas engine 103 as the driving source, and the second compressor 102 as the electric motor as the driving source are driven. The first exhaust heat recovery decompression device 116 and the second exhaust heat recovery decompression device 119 are both opened. The four-way valve 105 is set to flow the refrigerant as shown by the solid lines.

The refrigerant with high temperature and high pressure compressed by the first compressor 101 and the second compressor 102 flows into the oil separator 104. The refrigerant flowing into the oil separator 104 becomes a gas refrigerant with high purity from which oil is separated, passes through the four-way valve 105, and is supplied to the indoor unit 200.

The gas refrigerant with high temperature and high pressure entering the indoor unit 200 flows into the indoor heat exchanger 201, condenses after exchanging heat with air in the space to be air-conditioned and radiating heat, becomes a liquid refrigerant, passes through the indoor decompression device 203 and flows out from the indoor unit 200.

The liquid refrigerant flowing out from the indoor unit 200 returns to the outdoor unit 100 again. Part of the liquid refrigerant flowing into the outdoor unit 100 flows into the first bypass pipe 115 and the second bypass pipe 118. The remaining liquid refrigerant that does not flow into the first bypass pipe 115 and the second bypass pipe 118 is decompressed in the outdoor decompression device 109 to be in a gas-liquid two-phase state and flows into the outdoor heat exchanger 106.

The liquid refrigerant flowing into the first bypass pipe 115 is decompressed in the first exhaust heat recovery decompression device 116 to be in a gas-liquid two-phase state, and flows into the first exhaust heat recovery heat exchanger 117. The refrigerant in the gas-liquid two-phase state flowing into the first exhaust heat recovery heat exchanger 117 evaporates after absorbing heat from the engine cooling water described later, and becomes a gas refrigerant with low temperature and low pressure. Further, the refrigerant in the gas-liquid two-phase state flowing in the outdoor heat exchanger 106 evaporates after exchanging heat with the outside air and absorbing heat, and becomes a gas refrigerant with low temperature and low pressure. Thereafter, the gas refrigerant with low temperature and low pressure joins the gas refrigerant with low temperature and low pressure evaporated in the first exhaust heat recovery heat exchanger 117 in a process of passing through the four-way valve 105 and the low pressure gas pipe 111, passes through the accumulator 112 and the suction pipe 113 of the first compressor 101, and returns to the first compressor 101.

The liquid refrigerant flowing into the second bypass pipe 118 is decompressed in the second exhaust heat recovery decompression device 119 to be in a gas-liquid two-phase state, and flows into the second exhaust heat recovery heat exchanger 120. The refrigerant in the gas-liquid two-phase state flowing into the second exhaust heat recovery heat exchanger 120 evaporates after absorbing heat from the engine cooling water described later, and becomes a gas refrigerant with medium temperature and medium pressure.

The gas refrigerant with medium temperature and medium pressure passes through the second bypass pipe 118, and returns to the second compressor 102. Here, since the check valve 126 is provided in the second compressor suction pipe 114 of the second compressor 102, the gas refrigerant with medium temperature and medium pressure is not sucked by the first compressor 101.

Accordingly, the gas refrigerant with low temperature and low pressure evaporated in the outdoor heat exchanger 106 and the first exhaust heat recovery heat exchanger 117 returns to the first compressor 101, and is compressed to a gas refrigerant with high temperature and high pressure, whereas the gas refrigerant with medium temperature and medium pressure evaporated in the second exhaust heat recovery heat exchanger 120 returns to the second compressor 102, and is compressed to a gas refrigerant with high temperature and high pressure, and the aforementioned process is repeated. The gas refrigerant with low temperature and low pressure evaporated in the outdoor heat exchanger 106, and the first exhaust heat recovery heat exchanger 117 returns to the first compressor 101, but when the outside air temperature is particularly low, and it is determined as difficult that the refrigerant absorbs heat from the outside air in the outdoor heat exchanger 106 or it is determined that the outdoor heat exchanger 106 is frosted (for example, the outside air temperature is 2°C or less), the first exhaust heat recovery decompression device 116 may be closed, and only the gas refrigerant with low temperature and low pressure evaporated in the first exhaust heat recovery heat exchanger 117 may be returned to the first compressor 101.

Further, in the oil return pipe 121, the first oil return adjustment valve 123, and the second oil return adjustment valve 125 are both opened. The lubricating oil separated in the oil separator 104 passes through the oil return pipe 121, a part of the lubricating oil is returned to the low pressure gas pipe 111 through the first oil return adjustment valve 123 and the first oil return pipe 122, and is sucked by the first compressor 101. The remaining lubricating oil is returned to the second bypass pipe 118 through the second oil return adjustment valve 125 and the second oil return pipe 124, passes through the second compressor suction pipe 114, is sucked by the second compressor 102, and repeats the aforementioned process.

In the time of a high load and low outside air temperature in which the gas engine 103 drives in the heating operation, the cooling water pump 127 for cooling the gas engine 103 drives. The cooling water that is pumped out by the cooling water pump 127 flows into the exhaust gas heat exchanger 128 first, and cools the exhaust gas of the gas engine 103. The exhaust gas cooled by the exhaust gas heat exchanger 128 is released to outside air from the exhaust gas muffler not illustrated. Next, the cooling water passing through the exhaust gas heat exchanger 128 flows into the gas engine 103, and cools the gas engine 103. Thereafter, the cooling water that cools the gas engine 103 flows into the three-way valve 129. The three-way valve 129 is controlled so as to allow the cooling water from the gas engine 103 to flow to both the radiator 107 and the second exhaust heat recovery heat exchanger 120 in the time of high load and low outside air temperature of the heating operation. The cooling water flowing into the radiator 107 is cooled by the introduced outside air in the outdoor unit 100. The cooling water flowing into the second exhaust heat recovery heat exchanger 120 radiates heat to the refrigerant with medium temperature and medium pressure that flows into the second exhaust heat recovery heat exchanger through the second bypass pipe 118, and is cooled. The cooling water further flows into the first exhaust heat recovery heat exchanger 117, radiates heat to the refrigerant with low temperature and low pressure that flows into the first exhaust heat recovery heat exchanger 117 through the first bypass pipe 115, and is cooled. Thereafter, the cooling water joins the cooling water flowing out of the radiator 107, returns to the cooling water pump 127 again, and repeats aforementioned process. Note that the outdoor unit control section not illustrated monitors the cooling water outlet temperature of the gas engine 103, and controls the rotational speed of the cooling water pump 127 and a division ratio of the three-way valve so that the cooling water outlet temperature is substantially constant.

As illustrated in FIG. 3, the trial calculation result and the actual machine evaluation result of the inventors reveal that in the aforementioned air-conditioning apparatus 300, a highest energy efficiency is obtained by driving only the second compressor 102 driven by the electric motor when the air-conditioning load is small, by driving only the first compressor 101 driven by the gas engine when the air-conditioning load is medium, and by driving the first compressor 101 driven by the gas engine 103 with maximum output and making up for insufficiency with the second compressor 102 driven by the electric motor when the air-conditioning load is high.

As above, in the present embodiment, in the heating operation time, the gas refrigerant evaporated in the first exhaust heat recovery heat exchanger, or in both of the first exhaust heat recovery heat exchanger and the outdoor heat exchanger is sucked by the first compressor, and the gas refrigerant evaporated in the second exhaust heat recovery heat exchanger is sucked by the second compressor, whereby the refrigerant evaporating in the first exhaust heat recovery heat exchanger, or in both of the first exhaust heat recovery heat exchanger and the outdoor heat exchanger, and the refrigerant evaporating in the second exhaust heat recovery heat exchanger are sucked by the separate compressors without joining each other.

Specifically, when the required load is large in the heating operation, and the compressor driven by the gas engine and the compressor driven by the electric motor are used in combination, exhaust heat of the gas engine can be used as the absorption heat source of the refrigerants that are sucked by the compressor driven by the gas engine and the compressor driven by the electric motor.

Further, in the present embodiment, the capacity of the first compressor is larger than the capacity of the second compressor, the first exhaust heat recovery heat exchanger and the second exhaust heat recovery heat exchanger are connected in series to the flow of the cooling water, and the second exhaust heat recovery heat exchanger is provided at the upstream side of the first exhaust heat recovery heat exchanger, so that even when the outside air temperature is particularly low, and the heat absorption amount of the refrigerant in the first exhaust heat recovery heat exchanger increases, the temperature of the cooling water flowing into the second exhaust heat recovery heat exchanger becomes a high temperature, and is not influenced by the heat absorption amount of the refrigerant in the first exhaust heat recovery heat exchanger.

Specifically, the exhaust heat of the gas engine can be effectively used according to the capacities of the first compressor and the second compressor, as the absorption heat source of the refrigerants sucked by both the compressor driven by the gas engine and the compressor driven by the electric motor.

Further, since the temperature of the cooling water flowing into the second exhaust heat recovery heat exchanger is a high temperature, it also becomes possible to reduce the power that is required to compress the refrigerant by the second compressor, if the pressure of the refrigerant sucked by the second compressor is set to be high.

By the above effect, according to the present invention, the air-conditioning apparatus with a high capability and high efficiency can be provided even when the required air-conditioning load is high in the heating operation.

The air-conditioning apparatus according to the present invention selects the driving sources of the compressors in response to the air-conditioning load, and thereby can be favorably used as the air-conditioner that can perform a highly efficient operation regardless of the air-conditioning load.

### Reference Sings List

- 100: Outdoor unit
- 101: First compressor
- 102: Second compressor
- 103: Gas engine
- 104: Oil separator
- 110: Refrigerant liquid pipe
- 111: Low pressure gas pipe
- 112: Accumulator
- 114: Second compressor suction pipe
- 115: First bypass pipe
- 116: First exhaust heat recovery decompression device
- 117: First exhaust heat recovery heat exchanger
- 118: Second bypass pipe
- 119: Second exhaust heat recovery decompression device
- 120: Second exhaust heat recovery heat exchanger
- 121: Oil return pipe
- 122: First oil return pipe
- 123: First oil return adjustment valve
- 124: Second oil return pipe
- 125: Second oil return adjustment valve
- 200: Indoor unit
- 300: Air-conditioning apparatus

## Claims

1. An air-conditioning apparatus in which a first compressor (101) with a gas engine (103) as a driving source and a second compressor (102) with an electric motor as a driving source are connected in parallel for circulation of a refrigerant to perform air-conditioning, **characterized in that**
a first bypass pipe (115) connecting a low pressure gas pipe (111) upstream of an accumulator (112) and a refrigerant liquid pipe (110) is provided, and in the first bypass pipe, a first exhaust heat recovery decompression device (116) and a fist exhaust heat recovery heat exchanger (117) are provided in order from the refrigerant liquid pipe,
a second bypass pipe (118) connecting a suction pipe (114) of the second compressor and the refrigerant liquid pipe is provided, and in the second bypass pipe, a second exhaust heat recovery decompression device (119) and a second exhaust heat recovery heat exchanger (120) are provided in order from the refrigerant liquid pipe,
an oil separator (104) is provided downstream of a junction portion of discharge pipes of the first compressor and the second compressor, and an oil return pipe (121) is provided at a bottom portion of the oil separator, and
the oil return pipe is connected to a first oil return pipe (122) connected to the low pressure gas pipe downstream of the accumulator via a first oil return adjustment valve (123), and a second oil return pipe (124) connected to the second bypass pipe downstream of the second exhaust heat recovery heat exchanger via a second oil return adjustment valve (125).

2. The air-conditioning apparatus according to claim 1, wherein
a capacity of the first compressor is larger than a capacity of the second compressor,
the air-conditioning apparatus comprising a cooling water circuit (400) cooling the gas engine, and
the first exhaust heat recovery heat exchanger and the second exhaust heat recovery heat exchanger are connected in series to a flow of cooling water, and the second exhaust heat recovery heat exchanger is provided at an upstream side of the first exhaust heat recovery heat exchanger.
